# EUROPÄISCHE PATENTSCHRIFT

(11) **EP 1 851 846 B1**
(45) Veröffentlichungstag und Bekanntmachung des Hinweises auf die Patenterteilung: **30.12.2009**
(21) Anmeldenummer: 06707270.2
(22) Anmeldetag: 24.02.2006
(51) Int. Cl.: H02M 7/5387

(54) **WECHSELRICHTER**
INVERTER
ONDULEUR

(30) Priorität: 26.02.2005 DE 102005008809
(43) Veröffentlichungstag der Anmeldung: 07.11.2007
(73) Patentinhaber: Kostal Industrie Elektrik GmbH, 58507 Lüdenscheid (DE)
(72) Erfinder: RÖTTGER, Dieter, 58730 Fröndenberg (DE); VOGEL, Thomas, 58708 Menden (DE)
(86) Internationale Anmeldenummer: PCT/EP2006/001736
(87) Internationale Veröffentlichungsnummer: WO 2006/089778

(56) Entgegenhaltungen:
- WO-A-2004/100348
- DE-A1- 19 937 410
- US-A- 6 154 379
- US-A1- 2004 165 408

## Beschreibung

Die vorliegende Erfindung betrifft einen elektrischer Wechselrichter, mit einem Zwischenkreis und mehreren Wechselrichterbrückenzweigen.

Vorbekannte Wechselrichter weisen ausgangsseitig ein bis drei Wechselrichterbrückenzweige auf und erzeugen damit eine ein-, zwei- oder dreiphasige Ausgangsspannung. Dabei sind bisher nur Wechselrichter bekannt geworden, die sich als ganze Einheit zuschalten. Dieses hat den Nachteil, daß der entsprechende Wechselrichter sofort den vollen Eigenverbrauch hat.

In der DE 199 37 410 A1 ist die Schaltungsanordnung eines Solarwechselrichters beschrieben, der ausgangsseitig drei Wechselrichterbrückenzweige zur Erzeugung eines Dreiphasenwechselstroms aufweist.

Nachteilig an solchen dreiphasigen Wechselrichtern ist, daß diese im unteren Teillastbereichbereich einen deutlich geringeren Wirkungsgrad aufweisen, als einphasige und zweiphasige Wechselrichter.

In der Praxis ist aber, insbesondere bei Photovoltaik-Wechselrichtern, der Wirkungsgrad im Teillastbereich besonders wichtig, da er erheblich zum Gesamtwirkungsgrad beträgt.

Es stellte sich daher die Aufgabe, einen mehrphasigen Wechselrichter zu schaffen, der sich, insbesondere im unteren Teillastbetrieb durch einen hohen Wirkungsgrad auszeichnet.

Diese Aufgabe wird erfindungsgemäß dadurch gelöst, dass der Wechselrichter eine ein- oder mehrphasige Ausgangsspannung erzeugt, dass eine Steuervorrichtung durch Ansteuerung einer entsprechenden Anzahl von Wechselrichterbrückenzweigen Phasen einzeln zu- oder abschaltet, und dass das Zu- und Abschalten von Phasen in Abhängigkeit von einem Maximalwert einer im Zwischenkreis auftretenden Spannungsänderung oder in Abhängigkeit von der in den Wechselrichter eingespeisten Leistung oder in Abhängigkeit von der Ausgangsleistung des Wechselrichters erfolgt.

Ziel der Überlegungen war es somit, den Eigenverbrauch des Wechselrichters besonders auch im Teillastbereich zu reduzieren. Dies führte zu der Idee, die Wechselrichterbrücke schrittweise zuzuschalten, d. h. bei sehr geringen Lasten nur eine Phase, bei etwas höheren Lasten zwei Phasen und bei noch höheren Lasten die dritte Phase.

Bei einphasigen Wechselrichtern besteht diese Möglichkeit grundsätzlich nicht. Es sind aber bisher auch keine dreiphasigen Systeme mit einer derartigen Funktionsweise bekannt.

Eine vorteilhafte Ausführungsform der Erfindung wertet eine Spannungswertänderung im Zwischenkreis aus, also an der den Wechselrichterbrückenzweige üblicherweise zur Energiespeicherung bzw. -pufferung vorgeschalteten Kondensatoranordnung. Im Zwischenkreis ergeben sich mit höherer Ausgangsleistung zunehmende Spannungsschwankungen ("Rippel"), deren Auftreten als Kriterium zur Einleitung des Mehrphasenbetriebs verwendet werden kann.

Vorteilhaft an einer bedarfsangepaßten Netzeinspeisung mit variabler Phasenanzahl ist, daß sich die Maximalleistung auf drei Wechselrichterbrückenzweige aufteilt, so daß die Wechselrichterbrückenzweige jeweils nur für ein Drittel der Maximallast ausgelegt sein müssen. Hierdurch ist der erforderliche Aufwand nicht größer, als bei einem einphasigen Wechselrichter, bei dem die eine Wechselrichterbrücke ja von vornherein für die Maximalleistung ausgelegt sein muß.

Im Teillastbereich, bei dem nur ein Bruchteil der Maximalleistung übertragen wird, sind damit auch eine oder zwei Wechselrichterbrückenzweige für die zu übertragende Leistung ausreichend dimensioniert.

Damit verbindet der erfindungsgemäße Wechselrichter die Vorteile eines dreiphasigen Wechselrichters und eines einphasigen bzw. zweiphasigen Wechselrichters, nämlich einerseits die Möglichkeit einer mehrphasigen Netzeinspeisung im Hochlastbereich mit einem besonders guten Wirkungsgrad im Teillastbereich. Insgesamt kann also die Wirtschaftlichkeit von Photovoltaikanlagen sowohl im unteren Teillastbereich im Vergleich zu einphasigen Geräten als auch im Vergleich zu bisher bekannten dreiphasigen Geräten erheblich gesteigert werden.

Besonders vorteilhaft ist es, eine im Zwischenkreis auftretenden Spannungswertänderung mittels eines Analog-Digital-Wandlers zu erfassen, dessen Ausgangssignal einem, die Wechselrichterbrückenzweige steuernden Microcontroller zugeführt wird, welcher daraufhin die Ansteuerung der Wechselrichterbrückenzweige entsprechend modifiziert.

Ein Ausführungsbeispiel der Erfindung ist in der Zeichnung schematisch dargestellt und wird im folgenden anhand der Zeichnung näher erläutert.

Es zeigen
- Figur 1: ein Blockschaltbild eines dreiphasigen Wechselrichters,
- Figur 2: den Wirkungsgradverlauf eines Wechselrichters bei ein- und bei mehrphasigem Betrieb,
- Figur 3: Zwischenkreisrippel bei unterschiedlich hohen Lasten.

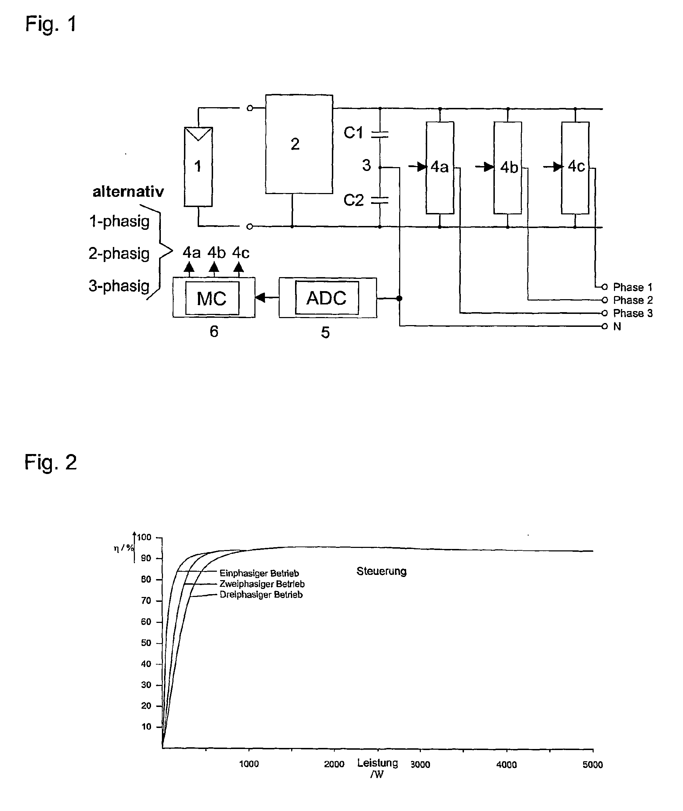

Figur 1 zeigt den schematischen Aufbau eines erfindungsgemäßen Wechselrichters anhand eines Blockschaltbilds. Der dargestellte Wechselrichter dient beispielhaft zur Einspeisung photovoltaisch erzeugter elektrischer Energie in ein dreiphasiges Stromnetz.

Hierzu ist der Wechselrichter eingangsseitig mit photovoltaischen Elementen (1) verbunden, die eine Gleichspannung bereitstellen. Diese Gleichspannung wird einem Gleichspannungs-/Gleichspannungswandler (2), im folgenden kurz als DC/DC-Wandler bezeichnet, zugeführt, der eine Anpassung der Eingangsspannung an die ausgangsseitig am Wechselrichter benötigte Spannungshöhe vornimmt.

Dem DC/DC-Wandler (2) nachgeschaltet ist eine Anordnung aus mehreren Kondensatoren (C1, C2) zur Energiespeicherung bzw. -pufferung, die den Zwischenkreis (3) des Wechselrichters ausbildet. Des weiteren besitzt der Wechselrichter drei Wechselrichterbrückenzweige (4a, 4b, 4c), die intern vorzugsweise jeweils als Halbbrückenanordnungen mit jeweils zwei steuerbaren Halbleiterschaltern ausgebildet sind. Zur Ansteuerung der Wechselrichterbrückenzweige (4a, 4b, 4c) ist eine Steuervorrichtung (6) vorgesehen, die vorteilhafterweise einen Microcontroller (MC) aufweist. Die Steuervorrichtung (6) ist eingangsseitig mit einer weiteren Vorrichtung (5) verbunden, welche eine Spannung bzw. einen Spannungsverlauf im Zwischenkreis (3) erfaßt und auswertet.

Zweckmäßigerweise weist die Vorrichtung (5) zur Spannungsüberwachung einen Analog-Digital-Wandler (ADC) auf, der seine Ausgangssignale zur Auswertung dem Microcontroller (MC) der Steuervorrichtung (6) zur Ansteuerung der Wechselrichterbrückenzweige (4a, 4b, 4c) zuführt.

Der Wechselrichter weist speziell drei Wechselrichterbrückenzweige (4a, 4b, 4c) auf, durch die eine dreiphasige Wechselspannung zur Einspeisung in das Stromnetz bereitgestellt werden kann. Hierbei besteht das Problem, daß der Wirkungsgrad des Wechselrichters bei einer geringen Belastung des Wechselrichterausgangs im dreiphasigen Betrieb deutlich schlechter ist als im einphasigen Betrieb mit nur einer Wechselrichterbrücke.

Dies verdeutlicht die Figur 2. Dargestellt ist der Wirkungsgradverlauf eines typischen dreiphasigen Wechselrichters für 5kW Gesamtleistung, der bei ansonsten gleichem Aufbau mit einer, zwei oder drei gesteuerten Wechselrichterbrückenzweige betrieben wird. Wie aus dem Diagramm hervorgeht, sinkt der Wirkungsgrad des Wechselrichters mit sinkender Leistungsentnahme deutlich ab.

Hierbei ist der Wirkungsgrad bei einem dreiphasigen Wandlerbetrieb bereits ab einer Ausgangsleistung von etwa 1000 W deutlich verringert, während er bei einem zwei- oder einphasigen Betrieb des Wechselrichters zunächst noch annähernd konstant bleibt. Unterhalb einer Ausgangsleistung von etwa 500 W zeigt sich dann ein einphasiger Wandlerbetrieb hinsichtlich des erreichbaren Wirkungsgrads gegenüber einem zwei- oder gar dreiphasigen Betrieb überlegen.

Zur Lösung dieses Problems schaltet der erfindungsgemäße Wechselrichter bei abfallender Ausgangsleistung im Teillastbereich von dreiphasigem Betrieb zunächst auf zweiphasigen Betrieb und dann auf einphasigen Betrieb um, wodurch in jedem Lastbereich immer der günstigste Wirkungsgrad erzielt wird. Zwar wird durch die Umschaltung im Teillastbereich nur eine ein- oder zweiphasige Spannung in ein dreiphasiges Netz eingespeist; aufgrund der hier in Frage stehenden, im Vergleich zu der durch das Netz transportierten Gesamtleistung, sehr geringen einzuspeisenden Leistungen erweist sich dies jedoch als unproblematisch.

Die Umschaltung zwischen einphasigem und mehrphasigem Wechselrichter geschieht hierbei folgenderweise. Bei Wechselrichtern mit einphasiger Netzeinspeisung treten bei höheren Leistung im Zwischenkreis Spannungsschwankungen auf, die im folgenden auch kurz als "Rippel" bezeichnet werden. Während bei einphasigen Wechselrichtern sehr große Kondensatoren verwendet werden, um solch eine Rippelbildung zu vermeiden, haben dreiphasige Wechselrichter im Vergleich zu einphasigen Wechselrichtern grundsätzlich sehr kleine Zwischenkreiskondensatoren (C1, C2), da bei dreiphasiger Einspeisung die Summe der eingespeisten Leistung zu jedem Zeitpunkt exakt gleich ist.

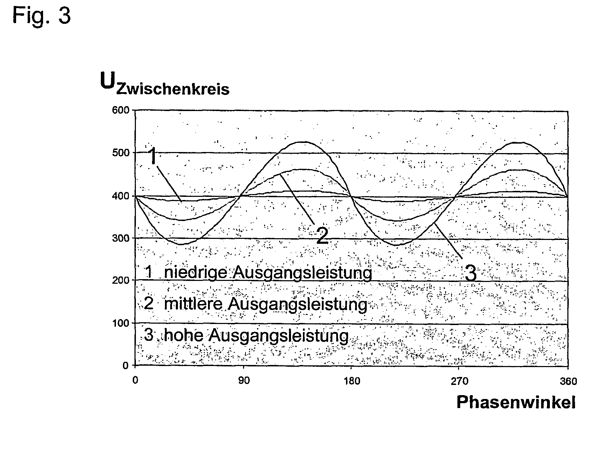

Bei einphasiger Einspeisung mit einem dreiphasigen Wechselrichter ergibt sich somit ein Rippel im Zwischenkreis. Wird nur mit geringer Leistung einphasig eingespeist, ist der Spannungswert dieses Rippels entsprechend gering. Figur 3 zeigt den Verlauf der Zwischenkreisspannung bei verschiedenen Leistungen. Bei kleinen übertragenen Leistungen schwankt die Zwischenkreisspannung nur schwach um einen Mittelwert; bei hohen Leistungen weist die Zwischenkreisspannung dagegen eine große Amplitude auf.

Das Problem der Rippelbildung im Zwischenkreis kann auf einfache Weise durch eine Spannungsüberwachung des Zwischenkreises beseitigt werden. Hierbei wird ein maximal zulässiger Spannungsrippel definiert. Die Auswertelektronik der Vorrichtung (5) erfaßt die Zwischenkreisspannung und die auftretenden Rippel und gibt die Informationen an die Steuervorrichtung (6) weiter. Diese schaltet dann, durch Ansteuerung einer entsprechenden Anzahl von Wechselrichterbrückenzweigen (4a, 4b, 4c) weitere Phasen zu oder ab; je nach Höhe der erfaßten Rippelspannung.

Die Erfindung nutzt damit die ursprünglich nachteilige Eigenschaft der Rippelbildung im Zwischenkreis aus, um einerseits die Spannungswerte der Rippel gering zu halten und dabei zugleich den günstigsten Umschaltzeitpunkt zwischen Ein- und Mehrphasenbetrieb zu bestimmen.

Gegebenenfalls können auch weitere Kriterien zum Zu- und Wegschalten der Phasen verwendet werden. Neben dem Zwischenkreisrippel kann auch die Last an einer einzelnen Phase als Kriterium hinzugezogen werden, um weitere Phasen zu- oder abzuschalten. Damit kann zusätzlich die Belastung der Leistungshalbleiter der Wechselrichterbrückenzweige mit überwacht werden.

Durch die beschriebene Anordnung kann der Gesamtwirkungsgrad von Photovoltaik-Wechselrichtern im Teillastbereich im Vergleich zu bisher bekannten Geräten erheblich verbessert werden.

### Bezugszeichen

- 1: photovoltaische Elemente
- 2: DC/DC-Wandler
- 3: Zwischenkreis (Kondensatoren)
- 4a, 4b, 4c: Wechselrichterbrückenzweige
- 5: Vorrichtung (zur Erfassung einer elektrischen Größe)
- 6: Steuervorrichtung

- ADC: Analog-Digitalwandler
- C1, C2: Kondensatoren
- MC: Microcontroller

## Patentansprüche

1. Elektrischer Wechselrichter, mit einem Zwischenkreis (3) und mehreren Wechselrichterbrückenzweigen (4a, 4b, 4c),
**dadurch gekennzeichnet,**
**dass** der Wechselrichter eine ein- oder mehrphasige Ausgangsspannung erzeugt,
**dass** eine Steuervorrichtung (6) durch Ansteuerung einer entsprechenden Anzahl von Wechselrichterbrückenzweigen (4a, 4b, 4c) Phasen einzeln zu- oder abschaltet, und
**dass** das Zu- und Abschalten von Phasen in Abhängigkeit von einem Maximalwert einer im Zwischenkreis (3) auftretenden Spannungsänderung oder in Abhängigkeit von der in den Wechselrichter eingespeisten Leistung oder in Abhängigkeit von der Ausgangsleistung des Wechselrichters erfolgt.

2. Elektrischer Wechselrichter nach Anspruch 1, **dadurch gekennzeichnet, dass** zur Überwachung einer elektrischen Größe ein Analog-Digital-Wandler (ADC) vorgesehen ist.

3. Elektrischer Wechselrichter nach Anspruch 1, **dadurch gekennzeichnet, dass** die Steuervorrichtung (6) einen Microcontroller (MC) aufweist.

4. Elektrischer Wechselrichter nach Anspruch 1, **dadurch gekennzeichnet, dass** insgesamt drei Wechselrichterbrückenzweige (4a, 4b, 4c) vorgesehen sind.

5. Elektrischer Wechselrichter nach Anspruch 1, **dadurch gekennzeichnet, dass** die Wechselrichterbrückenzweige (4a, 4b, 4c) als steuerbare Halbbrücken ausgebildet sind.

6. Elektrischer Wechselrichter nach Anspruch 1, **dadurch gekennzeichnet, dass** der Wechselrichter Bestandteil einer Photovoltaik-Anlage ist.

7. Elektrischer Wechselrichter nach Anspruch 1 oder 6, **dadurch gekennzeichnet, dass** der Wechselrichter zur Einspeisung von elektrischer Energie in das öffentliche Stromnetz vorgesehen ist.

## Claims

1. Electrical inverter with an intermediate circuit (3) and several inverter bridge branches (4a, 4b, 4c), **characterised by** the fact
that the inverter generates a single- or multi-phase output voltage,
that a control device (6) individually activates or deactivates phases by actuating a corresponding number of inverter bridge branches (4a, 4b, 4c), and that the activation and deactivation of phases is effected in dependence on a maximum value of a voltage change occurring in the intermediate circuit (3), or in dependence on the power fed into the inverter, or in dependence on the power output of the inverter.

2. Electrical inverter according to Claim 1, **characterised by** the fact that an analogue-digital converter (ADC) is provided for monitoring an electrical quantity.

3. Electrical inverter according to Claim 1, **characterised by** the fact that the control device (6) features a microcontroller (MC).

4. Electrical inverter according to Claim 1, **characterised by** the fact that a total of three inverter bridge branches (4a, 4b, 4c) are provided.

5. Electrical inverter according to Claim 1, **characterised by** the fact that the inverter bridge branches (4a, 4b, 4c) are designed as controllable half-bridges.

6. Electrical inverter according to Claim 1, **characterised by** the fact that the inverter is a constituent of a photovoltaic installation.

7. Electrical inverter according to Claim 1 or Claim 6, **characterised by** the fact that the inverter is provided for feeding electrical energy into the public power grid.

## Revendications

1. Onduleur électrique, avec un circuit intermédiaire (3) et plusieurs branches en ponts d'onduleur (4a, 4b, 4c), **caractérisé en ce que**
ledit onduleur génère une tension de sortie monophasée ou polyphasée,
un dispositif de commande (6) connecte ou déconnecte des phases individuellement, par excitation d'un nombre approprié de branches en ponts d'onduleur (4a, 4b, 4c), la connexion et la déconnexion de phases s'effectue en fonction d'une valeur maximale d'un changement de tension se produisant dans le circuit intermédiaire (3), ou en fonction de la puissance appliquée dans l'onduleur, ou en fonction de la puissance de sortie de l'onduleur.

2. Onduleur électrique selon la revendication 1, **caractérisé en ce que**, pour le contrôle d'une grandeur électrique, un convertisseur analogique-numérique (ADC) est prévu.

3. Onduleur électrique selon la revendication 1, **caractérisé en ce que** le dispositif de commande (6) présente un microcontrôleur (MC).

4. Onduleur électrique selon la revendication 1, **caractérisé en ce que** trois branches en ponts d'onduleur (4a, 4b, 4c) d'onduleur sont prévus au total.

5. Onduleur électrique selon la revendication 1, **caractérisé en ce que** les branches en ponts d'onduleur (4a, 4b, 4c) sont réalisés en tant que demis-ponts.

6. Onduleur électrique selon la revendication 1, **caractérisé en ce que** ledit onduleur fait partie d'une installation photovoltaïque.

7. Onduleur électrique selon revendication 1 ou 6, **caractérisé en ce que** ledit onduleur est prévu pour alimenter le réseau publique en énergie électrique.
